# EUROPÄISCHE PATENTSCHRIFT

(11) **EP 0 659 535 B1**
(45) Veröffentlichungstag und Bekanntmachung des Hinweises auf die Patenterteilung: **22.09.1999**
(21) Anmeldenummer: 94120600.5
(22) Anmeldetag: 23.12.1994
(51) Int. Cl.: B29C 47/06, F16L 11/12, F16L 9/133, B29C 49/42

(54) **Kühlflüssigkeitsleitung**
Coolant hose
Tuyau pour liquide de refroisissement

(30) Priorität: 23.12.1993 DE 9319880 U
(43) Veröffentlichungstag der Anmeldung: 28.06.1995
(73) Patentinhaber: EMS-INVENTA AG, 8001 Zürich (CH)
(72) Erfinder: Pfleger, Wolfgang, Dipl.-Ing., CH-7015 Tamins (CH)
(74) Vertreter: Kurig, Thomas, Dr.

(56) Entgegenhaltungen:
- EP-A- 0 428 834
- EP-A- 0 436 923
- WO-A-89/04755
- DATABASE WPI Section Ch, Week 9416 Derwent Publications Ltd., London, GB; Class A32, AN 94-124576 & JP-A-63 158 382 ( KINUGAWA RUBBER IND CO LTD) , 1.Juli 1988
- DATABASE WPI Section Ch, Week 7842 Derwent Publications Ltd., London, GB; Class A32, AN 78-75487A & JP-A-53 105 563 ( ONDALL SYSTEM KK) , 13.September 1978
- DATABASE WPI Section Ch, Week 9239 Derwent Publications Ltd., London, GB; Class A88, AN 92-320031 & JP-A-04 224 384 ( TOKAI RUBBER IND LTD) , 13.August 1992

## Beschreibung

Die Erfindung betrifft eine blasgeformte Kühlflüssigkeitsleitung aus mehreren Polymerschichten mit hoher Hydrolyse- und Berstdruckfestigkeit für Motoren, insbesondere Fahrzeugmotoren. Kühlflüssigkeitsleitungen haben in der Regel keine einfachen, sondern eher bizarre Formen und werden oft aus Metallteilen und elastischen Zwischenstücken zusammengesetzt, um die zum Teil intensiven Vibrationen des Motors auszugleichen. Dafür werden gemäß Stand der Technik mit Fasergewebe verstärkte Gummileitungen eingesetzt. Solche bevorzugt für Fahrzeugmotoren eingesetzten Gummileitungen haben den Nachteil, daß sie einerseits relativ teuer sind und trotzdem nicht den Anforderungen, besonders bei im Motorraum entstehenden hohen Temperaturen, vollständig gewachsen sind. Nach einer Betriebsdauer, die ca. 100 000 Fahrkilometer entspricht, fallen die mechanischen Eigenschaften bereits stark ab. Noch kritischer wird die Stabilität von Kühlwassergummileitungen für zukünftige Automobilmotoren, die die Temperaturen im Motorraum noch weiter ansteigen lassen als bisher, wodurch der Abfall der mechanischen Eigenschaften zusätzlich beschleunigt wird.

Kühlwasserleitungen, bestehend aus einer einzigen Polymerschicht, sog. Monoleitungen, finden bisher nur begrenzte Einsatzmöglichkeiten. Leitungen aus Polyolefinen zeigen oberhalb von 100°C eine ungenügende Berstdruckbeständigkeit auf. Für Polyamid wird durch das starke Quellen durch Kühlflüssigkeiten oder durch Hydrolyse die Festigkeit herabgesetzt.

Aus diesem Grund wird bisher bevorzugt glasfaserverstärktes Polyamid für Teile eingesetzt, die direkt mit Kühlflüssigkeit in Kontakt kommen, da die Glasfasern den Verlust an mechanischen Eigenschaften, z. B. durch Quellung oder durch Hydrolyse, teilweise kompensieren können. Glasfaserverstärkte Rohre sind jedoch nicht flexibel.

Durch Coextrusion hergestellte einfache rohrförmige aber flexible MehrschichtKühlflüssigkeitsleitungen nach der EP 0 436 923 haben aufgrund ihrer Form nur beschränkte Einsatzmöglichkeiten. Sie können besonders gut als Zwischenstücke Verwendung finden.

Es bestand daher die Aufgabe, Kühlflüssigkeitsleitungen zu schaffen, die die genannten Nachteile nicht aufweisen.

Diese Aufgabe wird gelöst durch die Kühlflüssigkeitsleitung gemäß Anspruch 1. Sie wird speziell durch Leitungen mit variierenden Wandstärken ihrer Schichten gelöst. Für den Einsatz als Kühlflüssigkeitsleitungen für Motoren, speziell Fahrzeugmotoren eignen sich darüberhinaus besonders Leitungen mit zumindest auf Teilstücken ringförmig oder spiralig gewellter Wandung.

Es wurde festgestellt, daß sich überraschenderweise Mehrschichtleitungen mit einer Kombination von unterschiedlich wirksamen Schichten aus geeigneten Polymeren, z.B. mit einer für Kühlmittel inerten, nicht quellbaren Innenschicht und einer steifen, tragenden, besonders berstdruckfesten Außenschicht, in besonderer Weise eignen, wenn diese Schichten in ihrer Dicke abschnittsweise den jeweiligen Anforderungen angepaßt werden können. Diese Schichten müssen miteinander verträglich oder durch eine mit den beiden Schichten verträgliche Zwischenschicht verbunden sein. Solche erfindungsgemäßen Leitungen sind bevorzugt nach Coextrusion ihrer Schichten aus den verschiedenen Polymeren und nach dem Einlegen des Rohr- oder Schlauchrohlings in eine beliebige Form, der sogenannten 3-D-Schlauchmanipulation, in bekannter Weise blasgeformt worden.

Besonders bevorzugt sind Mehrschichtleitungen mit polyolefinischer Innenschicht und Polyamid als Außenschicht. Durch die polyolefinische im Kühlmittel nicht quellbare Innenschicht wird eine hervorragende Hydrolysebeständigkeit gewährleistet. Polyamid in der Außenschicht gewährleistet eine hohe Berstdruckbeständigkeit und läßt die von den Automobil-Herstellern geforderten Werte erreichen, so daß die für Kühlflüssigkeitsleitungen aus Gummi unumgängliche textile Verstärkung entfallen kann.

Die erfindungsgemäßen Leitungen zeichnen sich dadurch aus, daß ihre Schichten aus Polymeren mit deutlich unterschiedlicher Flexibilität bestehen und daβ die Flexibilität der Leitung durch abschnittsweise unterschiedliche Wandstärkenverhältnisse der Schichten variierbar ist.

Die erfindungsgemäßen Leitungen sind wesentlich flexibler als die verstärkten Gummileitungen nach dem Stand der Technik. Erfahrungsgemäß führt das Verbiegen von glatten Rohren aus festen polymeren Materialien bei größeren Durchmessern zum Verknicken.

Eine besonders vorteilhafte Flexibilität, die sich aus der Notwendigkeit ergibt, auf engem Raum starke Leitungs-Krümmungen zu ermöglichen, zeigen Leitungen deren Wandung zumindest teilweise durch nach dem Stand der Technik bekannten Verfahren z.B. ringförmig oder spiralig gewellt wurde.

Zusätzlich Vorteile solcher erfindungsgemäßen Leitungen sind nicht nur das geringere Gewicht sondern auch die geringeren Herstellungskosten.

Berstdruckfeste Materialien für die Außenschicht sind besonders Polyamide, bevorzugt Homo- oder Copolyamide aus linearen aliphatischen Monomeren mit 6 bis 12 C-Atomen, z. B. aus Lactamen, Aminocarbonsäuren oder Diaminen und Dicarbonsäuren, oder solche aus aromatischen Monomeren mit 6 bis 12 C-Atomen, z.B. alkylierte Diamine oder Dicarbonsäuren mit 6 bis 20 C-Atomen mit einem oder mehreren Cyclohexan-Ringen, die ihrerseits über Alkylengruppen verbunden sein können. Beispielhaft genannt seien die semikristallinen Polyamide der Reihe PA 6 bis PA 12 und der Reihen PA 6,6, bis PA 6,12 sowie PA 12,6 bis PA 12,12. Es eignen sich auch Mischungen und Blends der genannten Polyamide, wobei Qualitäten mit hohen Viskositäten bevorzugt sind.

Inerte, quellungsbeständige Polymere für die Innenschicht sind halogenierte oder nicht halogenierte Homo- oder Copolyolefine, deren Mischungen oder Blends. Bevorzugt sind neben Homopolyolefinen die Copolyolefine des Ethylen bzw. Propylen mit weiteren α-Olefinen. Geeignet sind chlorierte, besonders auch fluorierte Polyolefine und Copolvolefine und auch Polyvinylchlorid. Von besonderem Vorteil sind auch Blends aus Polyolefinen und vernetzten oder teilvernetzten Elastomeren. Für zweischichtige Leitungen müssen die Homo- oder Copolyolefine selbst reaktive, verträglich machende Gruppen tragen, wie sie z.B. durch Pfropfung mit α-ungesättigten Säuren bzw. ihren Derivaten oder durch geeignete Comonomere wie z.B. Acryl- oder Methacrylsäuren oder deren Derivate zu erzielen sind.

Die innere Schicht besteht vorzugsweise aus Polymeren der Gruppe ETFE, PTFE, PVDF, PPS, PPE, POM, EVOH, PBT, EVA und deren Blends.

Die innere Schicht kann aber auch mit der Außenschicht durch eine mit beiden verträgliche Zwischenschicht genügend fest verbunden werden. Auch eignen sich dafür in besonderem Maße Polyolefine oder Copolyolefine, die reaktionsfähige Gruppen, besonders Carboxyl- oder Säureanhydridgruppen durch Pfropfung oder durch die genannten Comonomeren erhalten haben.

Der Anteil der berstdruckfesten Außenschicht beträgt 10 bis 95%, bevorzugt 25% bis 95% der Gesamtwandstärke.

Eine ganz besonders bevorzugte Ausführungsform der erfindungsgemäßen Kühlflüssigkeitsleitung besteht aus einer Innenschicht aus maleinsäuregepfropftem Polyolefin oder Copolyolefin und einer Außenschicht aus hochviskosem Polyamid 6 oder Polyamid 12 in der Außenschicht des gewellten Teils.

Die erfindungsgemäßen Kühlflüssigkeitsleitungen zeigen bei beliebiger Formgebung durch Kombination von geeignetem flexiblen Material für die Innenschicht und steifem Material alle Variationen der Flexibilität oder der Berstdruckfestigkeit, die darüberhinaus abschnittsweise durch gezielt unterschiedliche Wanddikkenverhältnisse beeinflußbar sind. Die Flexibilität kann in den gewellten Bereichen weiter erheblich verbessert sein. Dabei ist die Nahtlosigkeit der blasgeformten Leitung und der auf die Endstücke (Butzen) beschränkte geringe Anteil an Abfall ein ganz besonderer Vorteil.

Die Erfindung wird im folgenden anhand der Figuren beispielsweise beschrieben; in dieser zeigt:

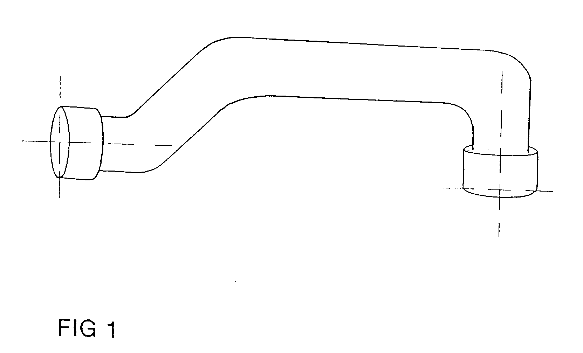

- Fig. 1: eine schematische Ansicht einer beliebig geformten Kühlflüssigkeitsleitung

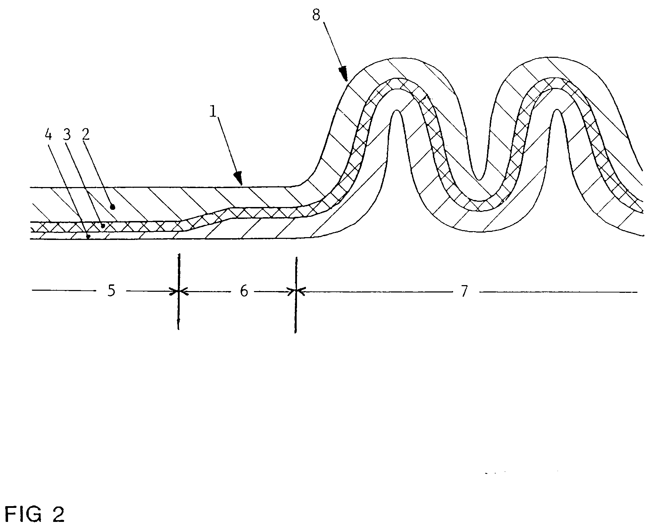

- Fig. 2: einen Längsschnitt durch eine dreischichtige Kühlflüssigkeitsleitung.
Die Kühlflüssigkeitsleitung (1) hat eine berstdruckbeständige Außenschicht (2), eine Haftvermittlerschicht (3), eine flexible lösungsmittelinerte Innenschicht (4) in einem steifen Bereich (5), einen halbflexiblen Bereich (6) und einen flexiblen Bereich (7) mit Wellung (8).

In einer bevorzugten Ausführung ist die Außenschicht der Kühlflüssigkeitsleitung ein Polyamid, das die erforderliche Steifigkeit und zugleich die entsprechende Berstdruckfestigkeit hat. Die Innenschicht ist eine sehr flexible und gegen Frostschutzmittel inertes Polymer, bevorzugt ein Polyolefin.

Das Wanddickenverhältnis zwischen der Innen- bzw. Außenschicht definiert die Flexibilität. In einem halbflexiblen Bereich hat die flexible Innenschicht eine vergrößerte Wandstärke. Die verringerte Dicke der Außenschicht bewirkt dadurch zugleich eine verminderte Biegesteifigkeit.

Zusätzliche Wellung ergibt eine große Flexibilität und die Möglichkeit, das Rohr um enge Radien zu biegen. Dabei wird die Berstdruckbeständigkeit durch den Well-Bereich vorgegeben. Der Vorteil der erfindungsgemäßen Kühlflüssigkeitsleitungen leigt darin, daß sehr steife Bereiche und flexible Bereiche abwechseln, die die Vibration zwischen Motor und Karosserie auffangen können. Bei Anwendung der 3-D-Schlauchmanipulation ist diese Kühlflüssigkeitsleitungs-Konstruktion in keinem Bereich durch eine Quetschnaht geschwächt.

## Patentansprüche

1. Kühlflüssigkeitsleitung aus mehreren Schichten aus thermoplastisch verarbeitbaren Polymeren, dadurch gekennzeichnet, daß sie durch Extrusionsblasformen, kombiniert mit 3-D-Schlauchmanipulation, hergestellt ist, wobei das Wandstärkenverhältnis der Schichten über die Länge der Leitung unterschiedlich ist, die Leitung zumindest aus einer inneren, gegenüber dem Kühlmittel inerten, nicht quellbaren Schicht und aus einer äußeren berstdruckfesten Schicht aus Polyamid besteht und sich die Polymeren der Innen- und Außenschicht in ihrer Flexibilität deutlich unterscheiden.

2. Kühlflüssigkeitsleitung gemäß einem der voranstehenden Ansprüche, bei der die äußere Schicht aus einem Homo- oder Copolyamid, aus Mischungen oder Blends derselben besteht.

3. Kühlflüssigkeitsleitung gemäß Anspruch 2, bei der die Homo- oder Co-polyamide aus linearen aliphatischen Monomeren mit 6 bis 12 C-Atomen, aus aromatischen Monomeren mit 6 bis 12 C-Atomen oder aus cycloaliphatischen Monomeren mit 6 bis 20 C-Atomen bestehen.

4. Kühlflüssigkeitsleitung gemäß einem der voranstehenden Ansprüche, bei der die innere Schicht aus halogenierten oder nicht halogenierten Homo- oder Copolyolefinen, aus Mischungen oder Blends derselben besteht, die funktionelle mit der äußeren Schicht verträglich machende Gruppen aufweisen.

5. Kühlflüssigkeitsleitung gemäß einem der voranstehenden Ansprüche, bei der die äußere Schicht aus Polyamid 6 und die innere Schicht aus einem Polyolefin oder Copolyolefin mit aufgepfropften α-ungesättigten Dicarbonsäuren oder deren Derivate besteht.

6. Kühlflüssigkeitsleitung gemäß einem der voranstehenden Ansprüche, bei der die innere Schicht aus halogenierten oder nicht halogenierten Homo- oder Copolyolefinen, aus Mischungen oder Blends derselben besteht, die mit der äußeren Schicht nicht verträglich sind, wobei zwischen der inneren und der äußeren Schicht eine mit diesen beiden verträgliche Zwischenschicht angeordnet ist.

7. Kühlflüssigkeitsleitung gemäß einem der vorhergehenden Ansprüche, bei der die innere Schicht aus chlorierten oder fluorierten Homo- oder Co-polyolefinen oder aus PVC besteht.

8. Kühlflüssigkeitsleitung gemäß einem der voranstehenden Ansprüche, bei der die mit der äußeren Schicht verträgliche innere oder Zwischenschicht ein durch Pfropfung oder Copolymerisation mit funktionellen Gruppen versehenes Polyolefin bzw. Copolyolefin ist.

9. Kühlflüssigkeitsleitung gemäß einem der voranstehenden Ansprüche, bei der die Wandstärke der äußeren berstdruckfesten Schicht 10% bis 95%, bevorzugt 25% bis 95% der Gesamtwandstärke ausmacht.

10. Kühlflüssigkeitsleitung gemäß einem der voranstehenden Ansprüche dadurch gekennzeichnet, daß sie zumindest auf einem Teilstück ein ring- oder spiralförmig gewellte Wandung aufweist.

11. Kühlflüssigkeitsleitung gemäß einem der voranstehenden Ansprüche, bei der die innere Schicht aus Polymeren der Gruppe ETFE, PTFE, PVDF, PPS, PPE, POM, EVOH, EVA, PBT und deren Blends besteht.

## Claims

1. Coolant hose formed from a plurality of layers of thermoplastically processable polymers, characterised in that it is produced by extrusion blow moulding, combined with 3-D tubular manipulation, the wall thickness ratio of the layers being variable over the length of the hose, the hose comprising at least one inner layer, which is non-swellable and is inert relative to the cooling agent, and one outer unburstable layer formed from polyamide, and the polymers of the inner and outer layers clearly differing in respect of their flexibility.

2. Coolant hose according to one of the preceding claims, in which the outer layer comprises a homo- or copolyamide, mixtures or blends thereof.

3. Coolant hose according to claim 2, in which the homo- or copolyamides comprise linear aliphatic monomers having 6 to 12 C atoms, aromatic monomers having 6 to 12 C atoms or cyclo-aliphatic monomers having 6 to 20 C atoms.

4. Coolant hose according to one of the preceding claims, in which the inner layer comprises halogenated or non-halogenated homo- or copolyolefines, mixtures or blends thereof, which have functional groups which make said layer compatible with the outer layer.

5. Coolant hose according to one of the preceding claims, in which the outer layer comprises polyamide 6, and the inner layer comprises a polyolefine or copolyolefine having grafted-on α-unsaturated dicarboxylic acids or their derivatives.

6. Coolant hose according to one of the preceding claims, in which the inner layer comprises halogenated or non-halogenated homo- or copolyolefines, mixtures or blends thereof, which are not compatible with the outer layer, an intermediate layer, which is compatible with both these layers, being disposed between the inner and the outer layers.

7. Coolant hose according to one of the preceding claims, in which the inner layer comprises chlorinated or fluorinated homo- or copolyolefines or PVC.

8. Coolant hose according to one of the preceding claims, in which the inner or intermediate layer, which is compatible with the outer layer, is a polyolefine or respectively a copolyolefine provided with functional groups by grafting or copolymerisation.

9. Coolant hose according to one of the preceding claims, in which the wall thickness of the outer unburstable layer makes up 10% to 95%, preferably 25% to 95%, of the total wall thickness.

10. Coolant hose according to one of the preceding claims, characterised in that it has, at least in part, an annularly or spirally undulated wall.

11. Coolant hose according to one of the preceding claims, in which the inner layer comprises polymers of the group ETFE, PTFE, PVDF, PPS, PPE, POM, EVOH, EVA, PBT and their blends.

## Revendications

1. Conduite d'eau de refroidissement constituée de plusieurs couches de polymères pouvant être transformés par voie thermoplastique, caractérisée en ce qu'elle est fabriquée par extrusion-soufflage combinée avec une manipulation en 3 D de la conduite, le rapport de l'épaisseur de paroi des couches étant différent sur la longueur de la conduite, la conduite étant constituée d'au moins une couche intérieure non gonflante, qui est inerte vis-à-vis de l'agent de refroidissement, et d'une couche extérieure en polyamide résistant à la pression d'éclatement, et les polymères des couches intérieure et extérieure se distinguant nettement en ce qui concerne leur flexibilité.

2. Conduite d'eau de refroidissement selon la revendication précédente, dans le cas de laquelle la couche extérieure est constituée d'un homo- ou d'un copolyamide, de mélanges ou de blends de ceux-ci.

3. Conduite d'eau de refroidissement selon la revendication 2, dans le cas de laquelle les homo- ou copolyamides sont constitués de monomères aliphatiques linéaires avec 6 à 12 atomes C, de monomères aromatiques avec 6 à 12 atomes C ou de monomères cyclo-aliphatiques avec 6 à 20 atomes C.

4. Conduite d'eau de refroidissement selon l'une des revendications précédentes, dans le cas de laquelle la couche intérieure est constituée d'homo- ou de copolyoléfines halogénées ou non halogénées , de mélanges ou de blends de celles-ci, qui contiennent des groupes fonctionnels assurant la compatibilité avec la couche extérieure.

5. Conduite d'eau de refroidissement selon l'une des revendications précédentes, dans le cas de laquelle la couche extérieure est constituée de polyamide 6, et la couche intérieure d'une polyoléfine ou d'une copolyoléfine sur laquelle sont greffés des acides dicarboxyliques α-insaturés ou leurs dérivés.

6. Conduite d'eau de refroidissement selon l'une des revendications précédentes, dans le cas de laquelle la couche intérieure est constituée d'homo- ou de copolyoléfines halogénées ou non halogénées, de mélanges ou de blends de celles-ci qui ne sont pas compatibles avec la couche extérieure, une couche intermédiaire compatible avec les couches intérieure et extérieure étant disposée entre ces deux couches.

7. Conduite d'eau de refroidissement selon l'une des revendications précédentes, dans le cas de laquelle la couche intérieure est constituée d'homo- ou de copolyoléfines chlorées ou fluorées ou de PVC.

8. Conduite d'eau de refroidissement selon l'une des revendications précédentes, dans le cas de laquelle la couche intérieure ou intermédiaire compatible avec la couche extérieure est une polyoléfine ou une copolyoléfine munie par greffage ou copolymérisation de groupes fonctionnels.

9. Conduite d'eau de refroidissement selon l'une des revendications précédentes, dans le cas de laquelle l'épaisseur de paroi de la couche extérieure résistant à la pression d'éclatement représente 10 % à 95 %, de préférence 25 % à 95 %, de l'épaisseur de paroi totale.

10. Conduite d'eau de refroidissement selon l'une des revendications précédentes, caractérisée en ce qu'elle présente, au moins dans une zone partielle, une paroi ondulée de forme annulaire ou hélicoïdale.

11. Conduite d'eau de refroidissement selon l'une des revendications précédentes, dans le cas de laquelle la couche intérieure est constituée de polymères du groupe ETFE, PTFE, PVDF, PPS, PPE, POM, EVOH, EVA, PBT et de leurs blends.
